(19) Europäisches Patentamt
European Patent Office
Office européen des brevets

(11) **EP 4 293 591 B1**

(12) **EUROPEAN PATENT SPECIFICATION**

(45) Date of publication and mention
of the grant of the patent:
**18.12.2024 Bulletin 2024/51**

(21) Application number: **23160443.0**

(22) Date of filing: **07.03.2023**

(51) International Patent Classification (IPC):
*G06Q 10/083* (2024.01)    *G06Q 10/087* (2023.01)

(52) Cooperative Patent Classification (CPC):
**G06Q 10/083; G06Q 10/087**

(54) **SYSTEM FOR MONITORING AND PREDICTING WATER DAMAGE IN SHIPPING CONTAINERS**

SYSTEM ZUR ÜBERWACHUNG UND VORHERSAGE VON WASSERSCHÄDEN IN VERSANDBEHÄLTERN

SYSTÈME DE SURVEILLANCE ET DE PRÉDICTION DE DÉGÂTS CAUSÉS PAR L'EAU DANS DES CONTENEURS D'EXPÉDITION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.06.2022 US 202217841413**

(43) Date of publication of application:
**20.12.2023 Bulletin 2023/51**

(73) Proprietor: **Hitachi, Ltd.**
**Tokyo 100-8280 (JP)**

(72) Inventors:
• **MENG, Lin**
**Tokyo 100-8280 (JP)**
• **CHAKRABARTI, Arnab**
**Tokyo 100-8280 (JP)**

(74) Representative: **MERH-IP Matias Erny Reichl Hoffmann**
**Patentanwälte PartG mbB**
**Paul-Heyse-Straße 29**
**80336 München (DE)**

(56) References cited:
**US-A1- 2022 156 682**

**Description**

**BACKGROUND**

**Field**

The present disclosure relates generally to shipping containers, and more specifically, to systems and methods for monitoring and predicting water damage in shipping containers.

**Related Art**

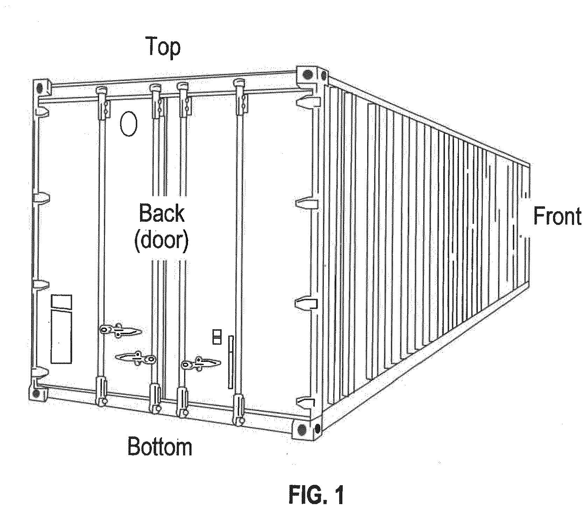

FIG. 1 illustrates an example of a shipping container. Such shipping containers are used to carry cargo all across the world. In the related art, there has been little visibility into cargo once it goes inside a container. Perishable cargo, such as coffee, cocoa or milk powder, sometimes degrades in shipping. If water damage can be monitored in real-time, it can facilitate prevention, faster shipping of replacements, faster insurance payouts, parametric insurance products and such.

In related art implementations, there are systems and methods that deal with verifying the state of an item during transit. Such related art implementations describe how data can be collected and transmitted for tracking state; however, this state is generic. US 2022/156682 A1 relates to a device that obtains container data regarding a plurality of items to be shipped together in a container. The device generates, based on the container data, a damage prediction model that models physical relationships between the plurality of items within the container. The device receives sensor data associated with the container. The device predicts, using the damage prediction model, which of the plurality of items were damaged during transport of the container, based on the sensor data associated with the container.

**SUMMARY**

Example implementations described herein involve systems and methods that specifically deal with water damage in the context of shipments. Adverse environment inside the container is a leading cause of damage to cargo in transportation. Thus, example implementations described herein involve a system and method to track the environment inside a container and to predict damage associated with water in any state: solid, liquid or gas.

Aspects of the present disclosure can involve a method, which can include executing a first model configured to model an internal environment of a shipping container, the first model configured to intake internal sensor data received from sensors internal to the shipping container and external data associated with an environment external to the shipping container, the first model configured to output internal environment parameters of the shipping container; executing a second model configured to derive water damage incurred to the cargo in the shipping container, the second model including a machine learning model configured to intake the internal environment parameters of the shipping container and output one or more of a probability of loss due to water damage or a predicted severity of water damage to the shipping container or one or more other metrics that depend on loss probability or severity; and prioritizing the shipping container for processing based on the one or more of the probability of loss due to water damage or the predicted severity of water damage to the cargo in the shipping container.

Aspects of the present disclosure can involve a computer program, which can include instructions including executing a first model configured to model an internal environment of a shipping container, the first model configured to intake internal sensor data received from sensors internal to the shipping container and external data associated with an environment external to the shipping container, the first model configured to output internal environment parameters of the shipping container; executing a second model configured to derive water damage incurred to the shipping container, the second model including a machine learning model configured to intake the internal environment parameters of the shipping container and output one or more of a probability of loss due to water damage or a predicted severity of water damage to the shipping container or one or more other metrics that depend on loss probability or severity; and prioritizing the shipping container for processing based on the one or more of the probability of loss due to water damage or the predicted severity of water damage to the cargo in the shipping container. The instructions and computer program can be stored in a non-transitory computer readable medium and executed by one or more processors.

Aspects of the present disclosure can involve a system, which can include means for executing a first model configured to model an internal environment of a shipping container, the first model configured to intake internal sensor data received from sensors internal to the shipping container and external data associated with an environment external to the shipping container, the first model configured to output internal environment parameters of the shipping container; means for executing a second model configured to derive water damage incurred to the shipping container, the second model including a machine learning model configured to intake the internal environment parameters of the shipping container and output one or more of a probability of loss due to water damage or a predicted severity of water damage

EP 4 293 591 B1

to the cargo in the shipping container or one or more other metrics that depend on loss probability or severity; and means for prioritizing the shipping container for processing based on the one or more of the probability of loss due to water damage or the predicted severity of water damage to the shipping container.

Aspects of the present disclosure can involve an apparatus, which can include a process, which can be configured to execute a first model configured to model an internal environment of a shipping container, the first model configured to intake internal sensor data received from sensors internal to the shipping container and external data associated with an environment external to the shipping container, the first model configured to output internal environment parameters of the shipping container; execute a second model configured to derive water damage incurred to the shipping container, the second model including a machine learning model configured to intake the internal environment parameters of the shipping container and output one or more of a probability of loss due to water damage or a predicted severity of water damage to the cargo in the shipping container or one or more other metrics that depend on loss probability or severity; and prioritize the shipping container for processing based on the one or more of the probability of loss due to water damage or the predicted severity of water damage to the shipping container.

## BRIEF DESCRIPTION OF DRAWINGS

FIG. 1 illustrates an example of a shipping container.

FIG. 2 illustrates an overall method, in accordance with an example implementation.

FIG. 3 illustrates example data in accordance with an example implementation.

FIG. 4 illustrates an example of the in-container environment modeling, in accordance with the desired implementation.

FIG. 5 illustrates an example flow for estimating the container's internal environment, in accordance with an example implementation.

FIG. 6 illustrates an example of damage modeling, in accordance with an example implementation.

FIG. 7 illustrates a system involving a plurality of shipping containers networked to a management apparatus, in accordance with an example implementation.

FIG. 8 illustrates an example computing environment with an example computer device suitable for use in some example implementations.

## DETAILED DESCRIPTION

The following detailed description provides details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semi-automatic implementations involving user or administrator control over certain aspects of the implementation, depending on the desired implementation of one of ordinary skill in the art practicing implementations of the present application. Selection can be conducted by a user through a user interface or other input means, or can be implemented through a desired algorithm. Example implementations as described herein can be utilized either singularly or in combination and the functionality of the example implementations can be implemented through any means according to the desired implementations.

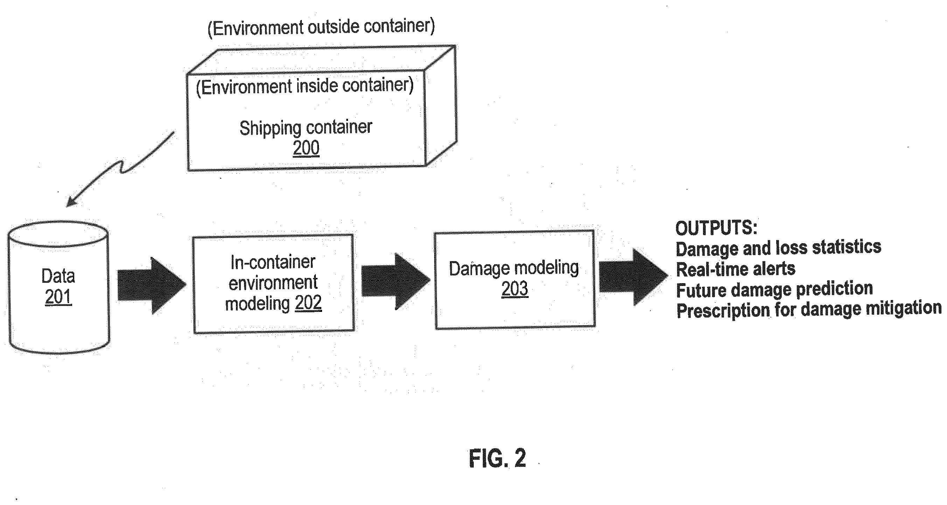

FIG. 2 illustrates an overall method, in accordance with an example implementation. As illustrated in the system of FIG. 2, there is a shipping container 200 with sensors to measure the environment inside the container, as well as any other information that is considered to be relevant to the shipping container. Such other information can involve sensors at a weather station monitoring weather conditions, sensors that are disposed around the ship or outside the container, and so on in accordance with the desired implementation. The sensor measurements are provided as data 201 which can be managed by a database. Such data 201 is used to conduct in-container environment modeling 202 to train/execute an in-container environment model for the shipping container. The output internal environment parameters of the shipping container from the in-container environment modeling 202 is provided to damage modeling 203 which is configured to predict the damage to the shipping container based on the output.

3

The in-container environment modeling 202 can be a machine learning model. For example, such a machine learning model can be a machine learning model trained from a database of historical data relating the internal environment parameters to the internal sensor data and the external data. Other models are also possible, and present disclosure is not limited thereto.

Depending on the desired implementation, such a model can be a physics based model. For example, the physics based model is a thermodynamic model of the container's internal climate. Or the model can be a signal processing model configured to derive the desired internal environment parameters based on sampling the sensor data.

Damage modeling 202 can be configured to derive water damage incurred to the shipping container, via a machine learning model configured to intake the internal environment parameters of the shipping container. The output representation of the water damage can involve one or more of a probability of loss due to water damage, a predicted severity of water damage to the shipping container, or one or more other metrics that depend on loss probability or severity depending on the desired implementation. To train such a model, the machine learning model can be trained against historical data that associates the measured/estimated internal parameters of the shipping container to outcomes (e.g., percentage lost due to water damage, whether loss occurred or not, and so on). Other outputs that can be provided by damage modeling 203 can include, but are not limited to, damage and loss statistics, real-time alerts, future damage prediction, and prescription for damage mitigation. Because the implementation is a machine learning model, the desired output can be provided if the appropriate historical data is available for training the machine learning model. Examples of other one or more metrics calculated from the loss probability and severity can include one or more of cargo quality degradation, supply chain delay, or total economic impact as configured and measured in accordance with the desired implementation.

Once the output is determined, software platforms associated with the shipping containers can prioritize the shipping containers the shipping container for processing based on the one or more of the probability of loss due to water damage or the predicted severity of water damage to the shipping container. In an example, shipping containers having a higher probability or predicted severity of water damage can be flagged or sorted to be opened first at port. In another example, processing can involve determining whether an alert is to be generated based on the one or more of the probability of loss due to water damage or the predicted severity of water damage to the shipping container or a metric calculated from the loss probability and severity. If the alert is determined to be generated, then an alert can be generated for the shipping container so that it can be opened during shipment.

Further details are provided as follows.

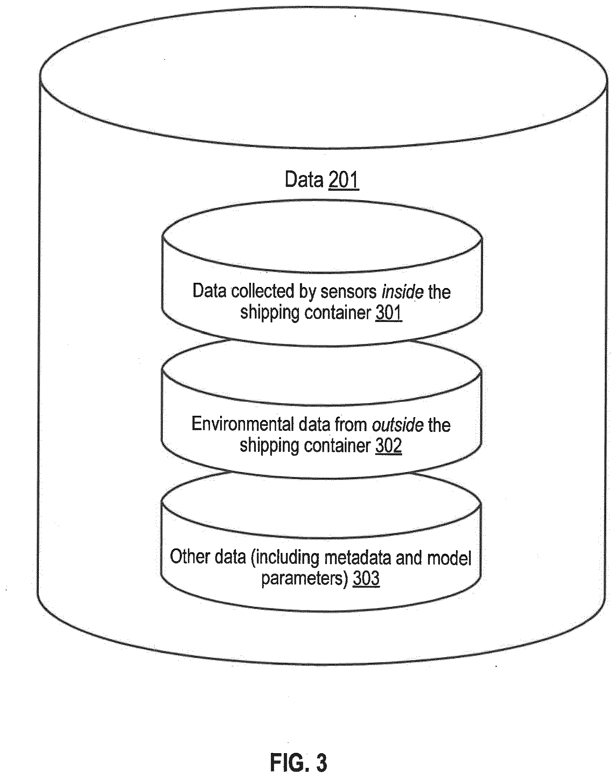

FIG. 3 illustrates example data in accordance with an example implementation. Examples of data that can be utilized in the example implementations described herein can include, but are not limited to, data collected by sensors inside the shipping container 301, environment data from outside the shipping container 302, and other data 303 in accordance with the desired implementation.

Data collected by sensors inside the shipping container 301 can include, but are not limited to, temperature, humidity, gas levels (such as CO2 and methane), shock / acceleration, door open indicator, presence of liquid water (e.g., on the floor) and so on in accordance with the desired implementation.

Environmental data from outside the shipping container 302 can include, but is not limited to, weather data (e.g., temperature, humidity, and so on), and other data considered to be relevant, in accordance with the desired implementation.

Other data 303 can include metadata and model parameters, such as, but not limited to, itinerary of the shipment, position of the shipping container on a ship, and so on in accordance with the desired implementation.

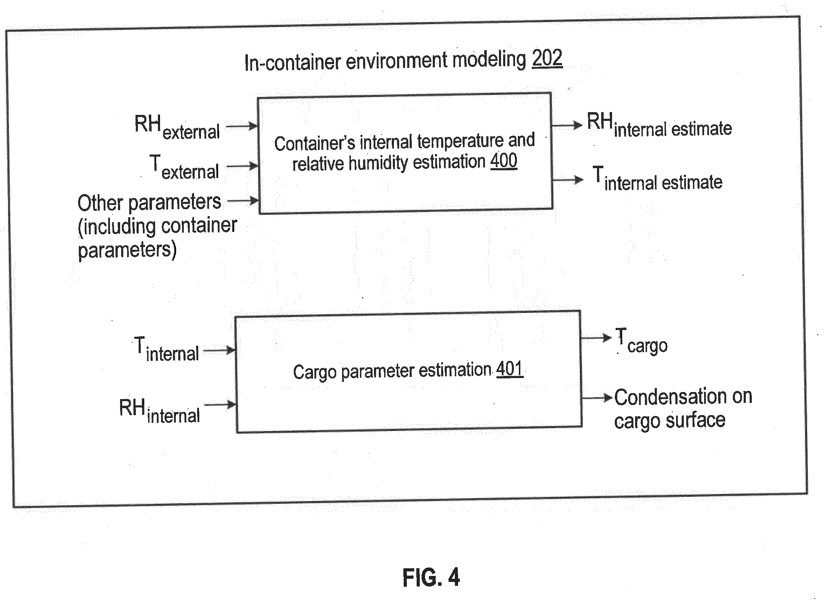

FIG. 4 illustrates an example of the in-container environment modeling, in accordance with the desired implementation. The environment inside the container is described by several parameters, including, but not limited to, air temperature, relative humidity (e.g., corresponding dew point), cargo surface temperature, presence of water (e.g., including condensation and ice on the cargo surface), concentration of gases (e.g., CO2 and methane), and so on.

Sometimes, one or more of the above parameters is measured directly by a sensor placed inside the container. For example, air temperature and humidity can be measured by sensors. However, there may be situations when direct measurements are unavailable, for example either sensors are not present, or the shipment has not yet taken place. Unlike air parameters (such as air temperature) which are easily measured by a sensor, what goes on at the cargo surface can be harder to measure and must often be estimated.

To estimate such variables, the in-container environment modeling 202 can involve two models that estimate variables when they are not directly measured.

The first model comes into play when sensors to measure in-container temperature and humidity are absent, the logic of which is shown in FIG. 4. The implementation of the container's internal temperature and relative humidity estimation model 400 can take a few forms. In a first form, the container's internal temperature and relative humidity estimation model 400 can be a physical model, such as a thermodynamic model that estimates how heat exchange occurs between the environment outside and inside the container. Or, the model can also be a supervised machine learning model that is trained on data from containers that have sensors inside them. Here, the sensor measurements inside the container serve as variables that the model predicts. Once the model is trained, it can be used to estimate in-container sensor measurements when there are no sensors. An example of a machine learning model that can estimate in-container time series is an LSTM (Long Short-Term Memory) model; however, other types of models may also work in accordance with the desired implementation, and the present disclosure is not limited thereto.

In the example of FIG. 4, the container's internal temperature and relative humidity estimation model 400 can intake, if available, external relative humidity measurements, external temperature measurements, and other desired parameters in accordance with the desired implementation such as internal container measurements. Based on the input, the container's internal temperature and relative humidity estimation model 400 can thereby provide an estimate of the relative humidity and the temperature..

The second model housed within the in-container environment modeling 202 is the cargo parameter estimation 401. Cargo parameter estimation 401 is used to estimate cargo parameters, specifically the temperature at the surface of the cargo and whether there is water in liquid form on the cargo surface.

There can be more than one way to estimate the cargo surface temperature. For example, one method can be based on Newton's Law of Cooling. Newton's Law of Cooling states that the rate of heat loss of a body is directly proportional to the difference in the temperatures between the body and its surroundings. Using this as a principle, a differential equation can be derived, which can be solved to yield the following formula to track cargo temperature:

$$T_{cargo}(t) = T_{internal} + \left(T_{cargo}(0) - T_{internal}\right)e^{-\left(\frac{t}{\tau}\right)}$$

In the above equation, uppercase T generally refers to temperature, whereas lowercase $t$ is time. $T_{cargo}(t)$ is the cargo temperature at time t, and $T_{internal}$ is the container's internal air temperature. $\tau$(tau) is a cargo-specific constant that determines how fast the cargo temperature responds to its environment.

Condensation inside a container follows the same physical process as dew-formation in nature. To determine condensation, the dew point of air is calculated from its temperature and relative humidity. Condensation occurs when cargo temperature falls below the air's dew point. Once condensation has occurred, one can further calculate how long it will take for the condensation to evaporate away. Some important kinds of water damage occur in the presence of moisture in liquid state, which makes the determination whether there is liquid water on the cargo surface important.

As illustrated in FIG. 4, cargo parameter estimation 401 can intake the internal relative humidity and the internal temperature, either from sensor data or by estimation from container's internal temperature and relative humidity estimation model 400. From the inputs, the cargo parameter estimation 401 can thereby estimate the temperature of the cargo as well as the condensation of the cargo's surface.

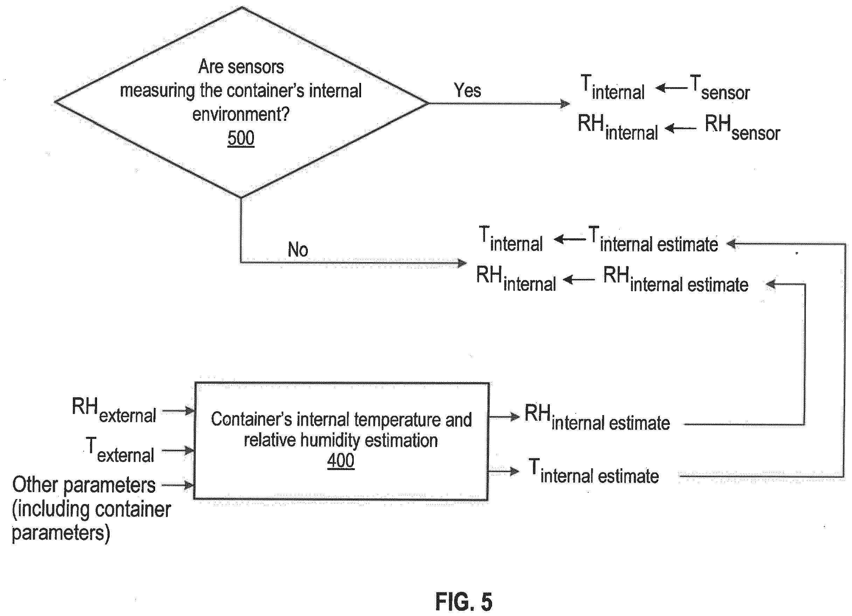

FIG. 5 illustrates an example flow for estimating the container's internal environment, in accordance with an example implementation. At 500, sensor measurements are processed to determine whether the sensors are monitoring the container's internal environment. If so (yes), then the sensor data is used for the parameters of the internal environment. If not (no), then the estimate is provided as the parameters for the container's internal environment by executing the container's internal temperature and relative humidity estimation 400. The container's internal temperature and relative humidity estimation 400 intakes the internal parameters that are available and provides the estimate accordingly as described with respect to FIG. 4.

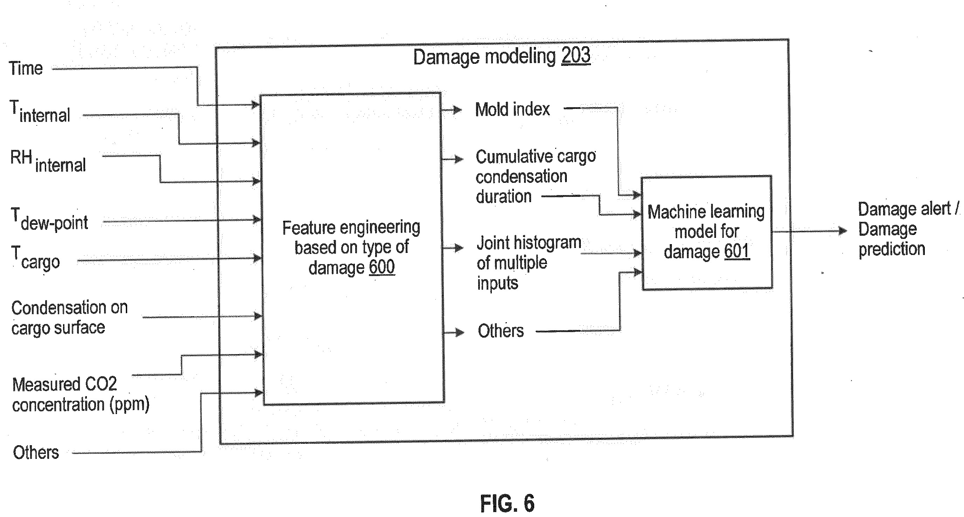

FIG. 6 illustrates an example of damage modeling, in accordance with an example implementation. Damage caused by water can take many forms, including but not limited to mold, corrosion, and/or structural weakening of cargo or packaging. Detecting or predicting damage, creating alerts, and so on, can often be viewed as a supervised machine learning problem, typically classification where the classes are degrees of damage (no damage / moderate damage / severe damage etc.). Engineered features are helpful in improving accuracy as well as adding explainability to the model's output. Considering this, the damage modeling 203 can involve two functions such as feature engineering based on type of damage 600, and machine learning model for damage 601.

With regards to the feature engineering based on type of damage 600, the example of mold risk is provided as an example. The growth of mold has been studied in controlled environments. The rate of growth of mold sometimes has the form:

$$\frac{dM}{dt} = \frac{1}{a * \exp(-c_1 \ln(T) - c_2 \ln(RH) + c_0)}$$

where $a$, $c_1$, $c_2$, $c_0$ etc. are constants that depend on the substrate, $T$ and $RH$ are temperature and relative humidity respectively, and $M$ is a mold index. Within the range of practical temperatures and humidity, mold grows fast at warm temperatures and high humidity. The mold index $M$, calculated from appropriate temperature and humidity readings can be a good feature for ranking shipments by mold risk. A machine learning model for mold damage 601 can use the mold index at any time as a feature to predict the risk of mold. A similar approach can be applied to other forms of water damage as well.

A lot of cargo is vulnerable to damage through exposure to humidity/water. The ability to track, predict and potentially prevent such damage is of benefit to manufacturers and shippers. The example implementations described herein outline the building blocks of a system for tracking and predicting damage due to water. Water damage can take many forms. The example implementations described herein can account for a variety of scenarios, ranging from those where the shipping container does not have sensors inside to those where a rich array of in-container sensors is available whose readings nonetheless need to be transformed into useful outputs.

As illustrated in FIG. 6, damage modeling 203 can intake outputs from in-container environment modeling 202, which can include, but is not limited to, timestamps of the information along the journey, measured/estimated internal temperature of the shipping container, measured/estimated internal relative humidity of the shipping container, dew point temperature, cargo temperature, condensation on the cargo surface, measured $CO_2$ concentration, and other data in accordance with the desired implementation. From the data, feature engineering can be conducted at 600 based on the type of damage. Examples of features that can be extract can include, but is not limited to, mold index, cumulative cargo condensation duration, joint histogram involving multiple inputs, and other features depending on the desired implementation. Such features are used as inputs for the machine learning model for damage 601, which is configured to provide damage prediction or damage alerts in accordance with the desired implementation.

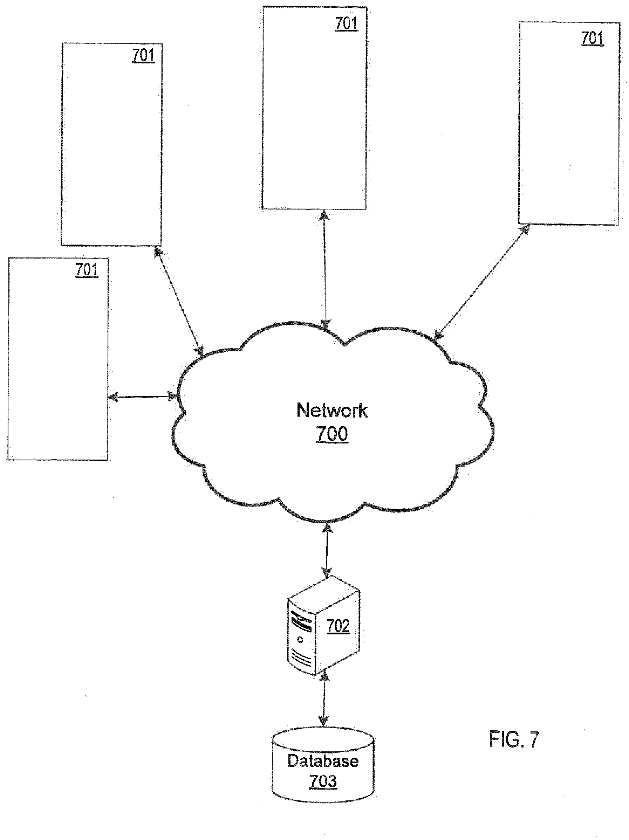

FIG. 7 illustrates a system involving a plurality of shipping containers networked to a management apparatus, in accordance with an example implementation. One or more shipping containers integrated with various sensors 701 are communicatively coupled to a network 700 (e.g., local area network (LAN), wide area network (WAN)) through the corresponding network interface of the sensor system installed in the shipping container 701, which is connected to a management apparatus 702. The management apparatus 702 manages a database 703, which contains historical data collected from the sensor systems from each of the shipping containers 701. In alternate example implementations, the data from the sensor systems of the shipping containers 701 can be stored to a central repository or central database such as proprietary databases that intake data from the shipping containers 701, or systems such as enterprise resource planning systems, and the management apparatus 702 can access or retrieve the data from the central repository or central database. The sensor systems of the shipping containers 701 can include any type of sensors to facilitate the desired implementation, such as but not limited to gyroscopes, accelerometers, global positioning satellite (GPS), thermometers, humidity gauges, or any sensors that can measure one or more of temperature, humidity, gas levels (e.g., $CO_2$ gas), shock, acceleration, door open indicator, light, or presence of liquid water.

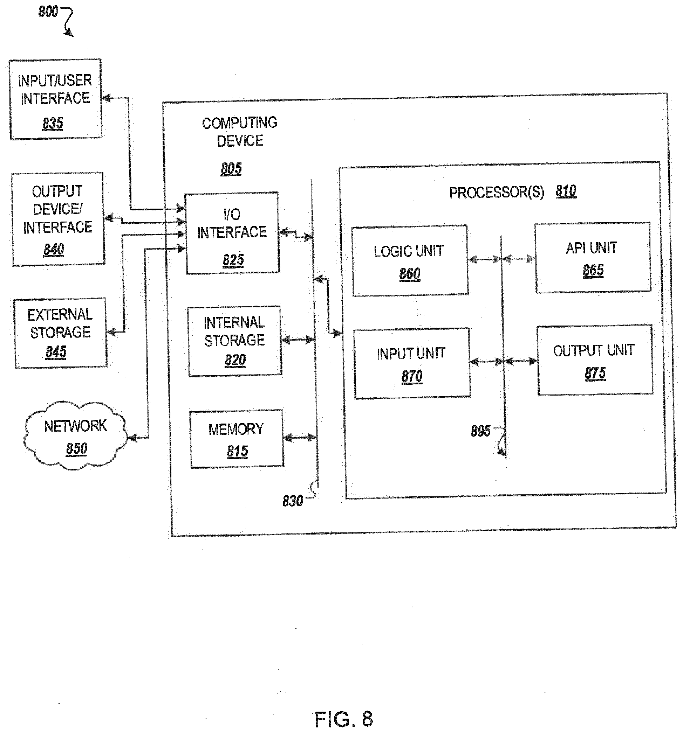

Depending on the desired implementation, the receipt of the plurality of sensor data points is in real time during shipment of the shipping container. For example, if the system of FIG. 8 is confined to a ship transporting the shipping container, then the local area network can provide the plurality of sensor data points in real time to the management apparatus 702, or it can be transmitted (e.g., via satellite) to a monitoring station. In another example implementation. the plurality of sensor data points can also be received after shipment of the shipping container (e.g., stored in the database of the ship for extraction and processing later at port by the management apparatus 702 as stored on the ship or at the port).

Further, database 703 can include additional sensor data points associated with previously shipped shipping containers (e.g., either from the same ship, or as imported from a master database). In example implementations, such additional sensor data points can supplement the plurality of sensor data points from the present shipping containers 701 if such previously shipped shipping containers were shipped in the same route as the present shipping containers 701.

Further, other external data may be transmitted to database 703 in accordance with the desired implementation. Such external data may be streaming information from the internet (e.g., regarding weather data), from sensors external to the shipping container, and so on, in accordance with the desired implementation.

FIG. 8 illustrates an example computing environment with an example computer device suitable for use in some example implementations, such as a management apparatus 702 as illustrated in FIG. 7. Computer device 805 in computing environment 800 can include one or more processing units, cores, or processors 810, memory 815 (e.g., RAM, ROM, and/or the like), internal storage 820 (e.g., magnetic, optical, solid state storage, and/or organic), and/or I/O interface 825, any of which can be coupled on a communication mechanism or bus 830 for communicating information or embedded in the computer device 805. I/O interface 825 is also configured to receive images from cameras or provide images to projectors or displays, depending on the desired implementation.

Computer device 805 can be communicatively coupled to input/user interface 835 and output device/interface 840. Either one or both of input/user interface 835 and output device/interface 840 can be a wired or wireless interface and can be detachable. Input/user interface 835 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 840 may include a display, television, monitor, printer, speaker, braille, or the like. In some example implementations, input/user interface 835 and output device/interface 840 can be embedded with or physically coupled to the computer device 805. In other example implementations, other computer devices may function as or provide the functions of input/user interface 835 and output device/interface 840 for a computer device 805.

Examples of computer device 805 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 805 can be communicatively coupled (e.g., via I/O interface 825) to external storage 845 and network 850 for communicating with any number of networked components, devices, and systems, including one or more computer devices of the same or different configuration. Computer device 805 or any connected computer device can be functioning as, providing services of, or referred to as a server, client, thin server, general machine, special-purpose machine, or another label.

I/O interface 825 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 800. Network 850 can be any network or combination of networks (e.g., the Internet, local area network, wide area network, a telephonic network, a cellular network, satellite network, and the like).

Computer device 805 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 805 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Processor(s) 810 can execute under any operating system (OS) (not shown), in a native or virtual environment. One or more applications can be deployed that include logic unit 860, application programming interface (API) unit 865, input unit 870, output unit 875, and inter-unit communication mechanism 895 for the different units to communicate with each other, with the OS, and with other applications (not shown). The described units and elements can be varied in design, function, configuration, or implementation and are not limited to the descriptions provided. Processor(s) 810 can be in the form of hardware processors such as central processing units (CPUs) or in a combination of hardware and software units.

In some example implementations, when information or an execution instruction is received by API unit 865, it may be communicated to one or more other units (e.g., logic unit 860, input unit 870, output unit 875). In some instances, logic unit 860 may be configured to control the information flow among the units and direct the services provided by API unit 865, input unit 870, output unit 875, in some example implementations described above. For example, the flow of one or more processes or implementations may be controlled by logic unit 860 alone or in conjunction with API unit 865. The input unit 870 may be configured to obtain input for the calculations described in the example implementations, and the output unit 875 may be configured to provide output based on the calculations described in example implementations.

Processor(s) 810 can be configured to execute a method or instructions including executing a first model configured to model an internal environment of a shipping container, the first model configured to intake internal sensor data received from sensors internal to the shipping container and external data associated with an environment external to the shipping container as illustrated at in-container environment modeling 202 of FIG. 2, the first model configured to output internal environment parameters of the shipping container; executing a second model configured to derive water damage incurred to the shipping container, the second model comprising a machine learning model configured to intake the internal environment parameters of the shipping container and output one or more of a probability of loss due to water damage or a predicted severity of water damage to the shipping container or one or more other metrics that depend on loss probability or severity as illustrate at damage modeling 203 of FIG. 2; and prioritizing the shipping container for processing based on the one or more of the probability of loss due to water damage or the predicted severity of water damage to the shipping container.

Depending on the desired implementation, the machine learning model is trained from a database of historical data relating the internal environment parameters with loss due to water damage and severity of water damage.

Depending on the desired implementation, the first model can be a physics based model. For example, the physics based model is a thermodynamic model of the container's internal climate.

Depending on the desired implementation, the first model can be a machine learning model trained from a database of historical data relating the internal environment parameters to the internal sensor data and the external data.

Depending on the desired implementation, the first model can be a signal processing model.

Depending on the desired implementation, the internal environment parameters can involve one or more of mold index or cumulative cargo condensation duration.

Depending on the desired implementation, wherein the internal sensor data comprises one or more of temperature, humidity, gas levels, shock, acceleration, door open indicator, light, or presence of liquid water.

Depending on the desired implementation, the external data can involve one or more of temperature or humidity.

Depending on the desired implementation, the prioritizing the shipping container for processing can include determining whether an alert is to be generated based on the one or more of the probability of loss due to water damage or the predicted severity of water damage to the shipping container or a metric calculated from the loss probability and severity; and for the determining indicating that the alert is to be generated, generating the alert for the shipping container.

Depending on the desired implementation, the one or more metrics calculated from the loss probability and severity can include one or more of cargo quality degradation, supply chain delay, or total economic impact.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the techniques of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the techniques of the present application. Various aspects and/or components of the described example implementations may be used singly or in any combination. It is intended that the specification and example implementations be considered as examples only, with the true scope and spirit of the present application being indicated by the following claims.

**Claims**

1. A method, **characterised by**:

   executing a first model (202) configured to model an internal environment of a shipping container (200), the first model configured to intake internal sensor data (301) received from sensors internal to the shipping container (200) and external data (302) associated with an environment external to the shipping container (200), the first model (202) configured to output internal environment parameters of the shipping container (200);
   executing a second model configured to derive water damage incurred to the shipping container (200), the second model comprising a machine learning model (601) configured to intake the internal environment parameters of the shipping container (200) and output one or more of a probability of loss due to water damage or a predicted severity of water damage to the shipping container (200) or one or more other metrics that depend on loss probability or severity; and
   prioritizing the shipping container (200) for processing based on the one or more of the probability of loss due to water damage or the predicted severity of water damage to the shipping container (200).

2. The method of claim 1, wherein the machine learning model (601) is trained from a database (201) of historical data relating the internal environment parameters with loss due to water damage and severity of water damage.

3. The method of claim 1, wherein the first model (202) is a physics based model.

4. The method of claim 3, wherein the physics based model is a thermodynamic model of the container's internal climate

5. The method of claim 1, wherein the first model (202) is a machine learning model trained from a database (201) of historical data relating the internal environment parameters to the internal sensor data and the external data.

6. The method of claim 1, wherein the first model (202) is signal processing model.

7. The method of claim 1, wherein the internal environment parameters comprise one or more of mold index or cumulative cargo condensation duration.

8. The method of claim 1, wherein the internal sensor data (301) comprises one or more of temperature, humidity, gas levels, shock, acceleration, door open indicator, light, or presence of liquid water.

9. The method of claim 1, wherein the external data (302) comprises one or more of temperature or humidity.

10. The method of claim 1, wherein the prioritizing the shipping container (200) for processing comprises:

    determining whether an alert is to be generated based on the one or more of the probability of loss due to water damage or the predicted severity of water damage to the shipping container (200) or a metric calculated from the loss probability and severity; and
    for the determining indicating that the alert is to be generated, generating the alert for the shipping container (200).

11. The method of claim 1, wherein the one or more metrics calculated from the loss probability and severity comprises one or more of cargo quality degradation, supply chain delay, or total economic impact.

12. A non-transitory computer readable medium, storing instructions for executing a process, the medium being **characterised by** the instructions comprising:

    executing a first model (202) configured to model an internal environment of a shipping container (200), the first model (202) configured to intake internal sensor data received from sensors internal to the shipping container (200) and external data associated with an environment external to the shipping container (200), the first model (202) configured to output internal environment parameters of the shipping container (200);
    executing a second model (203) configured to derive water damage incurred to the shipping container (200), the second model (203) comprising a machine learning model (601) configured to intake the internal environment parameters of the shipping container (200) and output one or more of a probability of loss due to water damage or a predicted severity of water damage to the shipping container (200) or one or more other metrics that depend on loss probability or severity; and

prioritizing the shipping container (200) for processing based on the one or more of the probability of loss due to water damage or the predicted severity of water damage to the shipping container (200).

13. An apparatus, comprising:
a processor, the apparatus being **characterised in that** the processor is configured to:

execute a first model (202) configured to model an internal environment of a shipping container (200), the first model (202) configured to intake internal sensor data received from sensors internal to the shipping container (200) and external data associated with an environment external to the shipping container (200), the first model configured to output internal environment parameters of the shipping container (200);
execute a second model (203) configured to derive water damage incurred to the shipping container (200), the second model comprising a machine learning model (601) configured to intake the internal environment parameters of the shipping container (200) and output one or more of a probability of loss due to water damage or a predicted severity of water damage to the shipping container (200) or one or more other metrics that depend on loss probability or severity; and
prioritize the shipping container (200) for processing based on the one or more of the probability of loss due to water damage or the predicted severity of water damage to the shipping container (200).

**Patentansprüche**

1. Verfahren, **gekennzeichnet durch**:

Ausführen eines ersten Modells (202), das konfiguriert ist, um eine interne Umgebung eines Versandcontainers (200) zu modellieren, wobei das erste Modell konfiguriert ist, um interne Sensordaten (301), die von Sensoren innerhalb des Versandcontainers (200) empfangen werden, und externe Daten (302), die mit einer Umgebung außerhalb des Versandcontainers (200) verknüpft sind, aufzunehmen, wobei das erste Modell (202) konfiguriert ist, um interne Umgebungsparameter des Versandcontainers (200) auszugeben;
Ausführen eines zweiten Modells, das konfiguriert ist, um Wasserschäden, die an dem Versandcontainer (200) aufgetreten sind, abzuleiten, wobei das zweite Modell ein Maschinenlernmodell (601) umfasst, das konfiguriert ist, um die internen Umgebungsparameter des Versandcontainers (200) aufzunehmen und eine oder mehrere von einer Wahrscheinlichkeit eines Verlusts aufgrund von Wasserschäden oder einer vorhergesagten Schwere von Wasserschäden an dem Versandcontainer (200) oder eine oder mehrere andere Metriken, die von der Verlustwahrscheinlichkeit oder -schwere abhängen, auszugeben; und
Priorisieren des Versandcontainers (200) zur Verarbeitung basierend auf der einen oder den mehreren von der Wahrscheinlichkeit eines Verlusts aufgrund von Wasserschäden oder der vorhergesagten Schwere von Wasserschäden an dem Versandcontainer (200).

2. Verfahren nach Anspruch 1, wobei das Maschinenlernmodell (601) aus einer Datenbank (201) von historischen Daten, die die internen Umgebungsparameter mit Verlust aufgrund von Wasserschäden und Schwere von Wasserschäden in Beziehung setzen, trainiert wird.

3. Verfahren nach Anspruch 1, wobei das erste Modell (202) ein physikbasiertes Modell ist.

4. Verfahren nach Anspruch 3, wobei das physikbasierte Modell ein thermodynamisches Modell des internen Klimas des Containers ist.

5. Verfahren nach Anspruch 1, wobei das erste Modell (202) ein Maschinenlernmodell ist, das aus einer Datenbank (201) von historischen Daten, die die internen Umgebungsparameter mit den internen Sensordaten und den externen Daten in Beziehung setzen, trainiert wird.

6. Verfahren nach Anspruch 1, wobei das erste Modell (202) ein Signalverarbeitungsmodell ist.

7. Verfahren nach Anspruch 1, wobei die internen Umgebungsparameter einen oder mehrere von Formindex oder kumulativer Ladungskondensationsdauer umfassen.

8. Verfahren nach Anspruch 1, wobei die internen Sensordaten (301) eines oder mehrere von Temperatur, Feuchtigkeit, Gaspegeln, Stoß, Beschleunigung, Türöffnungsanzeige, Licht oder Vorhandensein von flüssigem Wasser umfassen.

9. Verfahren nach Anspruch 1, wobei die externen Daten (302) eines oder mehrere von Temperatur oder Feuchtigkeit umfassen.

10. Verfahren nach Anspruch 1, wobei das Priorisieren des Versandcontainers (200) zur Verarbeitung Folgendes umfasst:

Bestimmen, ob ein Alarm erzeugt werden soll, basierend auf der einen oder den mehreren von der Wahrscheinlichkeit eines Verlusts aufgrund von Wasserschäden oder der vorhergesagten Schwere von Wasserschäden an dem Versandcontainer (200) oder einer Metrik, die aus der Verlustwahrscheinlichkeit und -schwere berechnet wird; und

für das Bestimmen, das anzeigt, dass der Alarm erzeugt werden soll, Erzeugen des Alarms für den Versandcontainer (200).

11. Verfahren nach Anspruch 1, wobei die eine oder die mehreren Metriken, die aus der Verlustwahrscheinlichkeit und -schwere berechnet werden, eines oder mehrere von Ladungsqualitätsverschlechterung, Lieferkettenverzögerung oder gesamtwirtschaftlichen Auswirkungen umfassen.

12. Nichtflüchtiges computerlesbares Medium, das Anweisungen zum Ausführen eines Prozesses speichert, wobei das Medium **dadurch gekennzeichnet ist, dass** die Anweisungen Folgendes umfassen:

Ausführen eines ersten Modells (202), das konfiguriert ist, um eine interne Umgebung eines Versandcontainers (200) zu modellieren, wobei das erste Modell (202) konfiguriert ist, um interne Sensordaten, die von Sensoren innerhalb des Versandcontainers (200) empfangen werden, und externe Daten, die mit einer Umgebung außerhalb des Versandcontainers (200) verknüpft sind, aufzunehmen, wobei das erste Modell (202) konfiguriert ist, um interne Umgebungsparameter des Versandcontainers (200) auszugeben;

Ausführen eines zweiten Modells (203), das konfiguriert ist, um Wasserschäden, die an dem Versandcontainer (200) aufgetreten sind, abzuleiten, wobei das zweite Modell (203) ein Maschinenlernmodell (601) umfasst, das konfiguriert ist, um die internen Umgebungsparameter des Versandcontainers (200) aufzunehmen und eine oder mehrere von einer Wahrscheinlichkeit eines Verlusts aufgrund von Wasserschäden oder einer vorhergesagten Schwere von Wasserschäden an dem Versandcontainer (200) oder eine oder mehrere andere Metriken, die von der Verlustwahrscheinlichkeit oder -schwere abhängen, auszugeben; und

Priorisieren des Versandcontainers (200) zur Verarbeitung basierend auf der einen oder den mehreren von der Wahrscheinlichkeit eines Verlusts aufgrund von Wasserschäden oder der vorhergesagten Schwere von Wasserschäden an dem Versandcontainer (200).

13. Vorrichtung, die Folgendes umfasst:
einen Prozessor, wobei die Vorrichtung **dadurch gekennzeichnet ist, dass** der Prozessor zu Folgendem konfiguriert ist:

Ausführen eines ersten Modells (202), das konfiguriert ist, um eine interne Umgebung eines Versandcontainers (200) zu modellieren, wobei das erste Modell (202) konfiguriert ist, um interne Sensordaten, die von Sensoren innerhalb des Versandcontainers (200) empfangen werden, und externe Daten, die mit einer Umgebung außerhalb des Versandcontainers (200) verknüpft sind, aufzunehmen, wobei das erste Modell konfiguriert ist, um interne Umgebungsparameter des Versandcontainers (200) auszugeben;

Ausführen eines zweiten Modells (203), das konfiguriert ist, um Wasserschäden, die an dem Versandcontainer (200) aufgetreten sind, abzuleiten, wobei das zweite Modell ein Maschinenlernmodell (601) umfasst, das konfiguriert ist, um die internen Umgebungsparameter des Versandcontainers (200) aufzunehmen und eine oder mehrere von einer Wahrscheinlichkeit eines Verlusts aufgrund von Wasserschäden oder einer vorhergesagten Schwere von Wasserschäden an dem Versandcontainer (200) oder eine oder mehrere andere Metriken, die von der Verlustwahrscheinlichkeit oder -schwere abhängen, auszugeben; und

Priorisieren des Versandcontainers (200) zur Verarbeitung basierend auf der einen oder den mehreren von der Wahrscheinlichkeit eines Verlusts aufgrund von Wasserschäden oder der vorhergesagten Schwere von Wasserschäden an dem Versandcontainer (200).

**Revendications**

1. Procédé, **caractérisé par** :

l'exécution d'un premier modèle (202) configuré pour modéliser un environnement interne d'un conteneur d'expédition (200), le premier modèle étant configuré pour recevoir des données de capteur internes (301) reçues de capteurs internes au conteneur d'expédition (200) et des données externes (302) associées à un environnement externe au conteneur d'expédition (200), le premier modèle (202) étant configuré pour délivrer en sortie des paramètres d'environnement interne du conteneur d'expédition (200) ;

l'exécution d'un second modèle configuré pour déduire des dommages causés à l'eau au conteneur d'expédition (200), le second modèle comprenant un modèle d'apprentissage machine (601) configuré pour recevoir les paramètres d'environnement interne du conteneur d'expédition (200) et délivrer en sortie une ou plusieurs d'une probabilité de perte due à des dommages causés à l'eau ou d'une sévérité prédite de dommages causés à l'eau au conteneur d'expédition (200) ou une ou plusieurs autres métriques qui dépendent de la probabilité de perte ou de la sévérité ; et

la priorisation du conteneur d'expédition (200) pour un traitement sur la base des une ou plusieurs de la probabilité de perte due à des dommages causés à l'eau ou de la sévérité prédite de dommages causés à l'eau au conteneur d'expédition (200).

2.  Procédé selon la revendication 1, dans lequel le modèle d'apprentissage machine (601) est formé à partir d'une base de données (201) de données historiques associant les paramètres d'environnement interne à une perte due à des dommages causés à l'eau et à une sévérité de dommages causés à l'eau.

3.  Procédé selon la revendication 1, dans lequel le premier modèle (202) est un modèle basé sur la physique.

4.  Procédé selon la revendication 3, dans lequel le modèle basé sur la physique est un modèle thermodynamique du climat interne du conteneur.

5.  Procédé selon la revendication 1, dans lequel le premier modèle (202) est un modèle d'apprentissage machine formé à partir d'une base de données (201) de données historiques associant les paramètres d'environnement interne aux données de capteur internes et aux données externes.

6.  Procédé selon la revendication 1, dans lequel le premier modèle (202) est un modèle de traitement de signal.

7.  Procédé selon la revendication 1, dans lequel les paramètres d'environnement interne comprennent un ou plusieurs parmi un indice de moule ou une durée de condensation de cargaison cumulée.

8.  Procédé selon la revendication 1, dans lequel les données de capteur internes (301) comprennent un ou plusieurs parmi une température, une humidité, des niveaux de gaz, un choc, une accélération, un indicateur d'ouverture de porte, une lumière ou une présence d'eau liquide.

9.  Procédé selon la revendication 1, dans lequel les données externes (302) comprennent un ou plusieurs parmi une température ou une humidité.

10. Procédé selon la revendication 1, dans lequel la priorisation du conteneur d'expédition (200) pour un traitement comprend :

la détermination si une alerte doit être générée sur la base des une ou plusieurs de la probabilité de perte due à des dommages causés à l'eau ou de la sévérité prédite de dommages causés à l'eau au conteneur d'expédition (200) ou d'une métrique calculée à partir de la probabilité de perte et de la sévérité ; et

pour la détermination indiquant que l'alerte doit être générée, la génération de l'alerte pour le conteneur d'expédition (200).

11. Procédé selon la revendication 1, dans lequel les une ou plusieurs métriques calculées à partir de la probabilité de perte et de la sévérité comprennent un ou plusieurs parmi une dégradation de qualité de cargaison, un retard de chaîne d'approvisionnement ou un impact économique total.

12. Support non transitoire lisible par ordinateur, stockant des instructions pour exécuter un processus, le support étant **caractérisé par** les instructions comprenant

l'exécution d'un premier modèle (202) configuré pour modéliser un environnement interne d'un conteneur d'expédition (200), le premier modèle (202) étant configuré pour recevoir des données de capteur internes reçues de capteurs internes au conteneur d'expédition (200) et des données externes associées à un environnement externe au conteneur d'expédition (200), le premier modèle (202) étant configuré pour délivrer en sortie des paramètres d'environnement interne du conteneur d'expédition (200) ;

l'exécution d'un second modèle (203) configuré pour déduire des dommages causés à l'eau au conteneur d'expédition (200), le second modèle (203) comprenant un modèle d'apprentissage machine (601) configuré pour recevoir les paramètres d'environnement interne du conteneur d'expédition (200) et délivrer en sortie une ou plusieurs d'une probabilité de perte due à des dommages causés à l'eau ou d'une sévérité prédite de dommages causés à l'eau au conteneur d'expédition (200) ou une ou plusieurs autres métriques qui dépendent de la probabilité de perte ou de la sévérité ; et

la priorisation du conteneur d'expédition (200) pour un traitement sur la base des une ou plusieurs de la probabilité de perte due à des dommages causés à l'eau ou de la sévérité prédite de dommages causés à l'eau au conteneur d'expédition (200).

13. Appareil, comprenant :

un processeur, l'appareil étant **caractérisé en ce que** le processeur est configuré pour :

exécuter un premier modèle (202) configuré pour modéliser un environnement interne d'un conteneur d'expédition (200), le premier modèle (202) étant configuré pour recevoir des données de capteur internes reçues de capteurs internes au conteneur d'expédition (200) et des données externes associées à un environnement externe au conteneur d'expédition (200), le premier modèle étant configuré pour délivrer en sortie des paramètres d'environnement interne du conteneur d'expédition (200) ;

exécuter un second modèle (203) configuré pour déduire des dommages causés à l'eau au conteneur d'expédition (200), le second modèle comprenant un modèle d'apprentissage machine (601) configuré pour recevoir les paramètres d'environnement interne du conteneur d'expédition (200) et délivrer en sortie une ou plusieurs d'une probabilité de perte due à des dommages causés à l'eau ou d'une sévérité prédite de dommages causés à l'eau au conteneur d'expédition (200) ou une ou plusieurs autres métriques qui dépendent de la probabilité de perte ou de la sévérité ; et

prioriser le conteneur d'expédition (200) pour un traitement sur la base des une ou plusieurs de la probabilité de perte due à des dommages causés à l'eau ou de la sévérité prédite de dommages causés à l'eau au conteneur d'expédition (200).

Top

Back
(door)

Front

Bottom

FIG. 1

FIG. 2

(Environment outside container)

(Environment inside container)

Shipping container
200

Data
201

In-container environment modeling 202

Damage modeling
203

OUTPUTS:
Damage and loss statistics
Real-time alerts
Future damage prediction
Prescription for damage mitigation

Data 201

Data collected by sensors *inside* the shipping container 301

Environmental data from *outside* the shipping container 302

Other data (including metadata and model parameters) 303

**FIG. 3**

EP 4 293 591 B1

In-container environment modeling <u>202</u>

$RH_{external}$ →

$T_{external}$ →

Other parameters (including container parameters) →

[ Container's internal temperature and relative humidity estimation <u>400</u> ]

→ $RH_{internal\ estimate}$

→ $T_{internal\ estimate}$

$T_{internal}$ →

$RH_{internal}$ →

[ Cargo parameter estimation <u>401</u> ]

→ $T_{cargo}$

→ Condensation on cargo surface

**FIG. 4**

Are sensors measuring the container's internal environment? 500

Yes → $T_{internal} \leftarrow T_{sensor}$
$RH_{internal} \leftarrow RH_{sensor}$

No → $T_{internal} \leftarrow T_{internal\ estimate}$
$RH_{internal} \leftarrow RH_{internal\ estimate}$

$RH_{external} \rightarrow$ Container's internal temperature and relative humidity estimation 400 $\rightarrow RH_{internal\ estimate}$

$T_{external} \rightarrow$

Other parameters (including container parameters) $\rightarrow$

$\rightarrow T_{internal\ estimate}$

FIG. 5

FIG. 6

701

701

701

701

Network
700

702

Database
703

FIG. 7

800

INPUT/USER
INTERFACE
*835*

COMPUTING
DEVICE
*805*

OUTPUT
DEVICE/
INTERFACE
*840*

I/O
INTERFACE
*825*

PROCESSOR(S) *810*

LOGIC UNIT
*860*

API UNIT
*865*

EXTERNAL
STORAGE
*845*

INTERNAL
STORAGE
*820*

INPUT UNIT
*870*

OUTPUT UNIT
*875*

NETWORK
*850*

MEMORY
*815*

895

830

FIG. 8

**EP 4 293 591 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2022156682 A1